Europäisches Patentamt

European Patent Office

Office européen des brevets

(11) Publication number: **0 245 544**

**A2**

(12) # EUROPEAN PATENT APPLICATION

(21) Application number: **86301752.1**

(51) Int. Cl.⁴: **B29B 17/00**

(22) Date of filing: **11.03.86**

The title of the invention has been amended (Guidelines for Examination in the EPO, A-III, 7.3).

(43) Date of publication of application:
**19.11.87 Bulletin 87/47**

(84) Designated Contracting States:
**BE DE FR GB IT SE**

(71) Applicant: **CELLUTANE CO LTD**
**1655 Kaneda**
**Atsugi-shi Kanagawa-ken(JP)**

Applicant: **AKIRA KNIT SERVICE CO LTD**
**14-4, Hachiman 2-chome**
**Ichinomiya-shi Aichi-ken(JP)**

(72) Inventor: **Yagi, Keiji**
**c/o Cellutane Co. Ltd. 1655 Kaneda**
**Atsugi-shi Kanagawa-ken(JP)**

(74) Representative: **Senior, Alan Murray et al**
**J.A. KEMP & CO 14 South Square Gray's Inn**
**London WC1R 5EU(GB)**

(54) **Method and apparatus for continuously producing sheet-like products from waste plastics.**

(57) A method and apparatus are presented for re- claiming plastic waste into a sheet-like product. The method comprises the steps of crushing plastic waste into pellets, mixing the pellets with adhesive, providing a first continuously running endless belt having a number of small holes formed therein, placing the pellets mixed with the adhesive substantially uniformly on the first endless belt, providing a second continuously running endless belt spaced a predetermined distance above the first endless belt, the second belt having a number of small holes formed therein, feeding the pellets in between the first and second endless belts, while pressing the pellets against the first endless belt by use of the second endless belt, and curing the adhesive to bind the pellets, thereby forming an integral sheet-like product.

Apparatus for performing the method is dis- closed which comprises a hopper for delivering crushed plastic waste, an adhesive supplier for supplying adhesive to the pellets, a first endless belt for receiving the pellets mixed with adhesive, a second endless belt for pressing the pellets against the first endless belt and a hot steam supplier for curing the adhesive to bind the pellets.

FIG.1

# METHOD OF CONTINUOUSLY RECLAIMING PLASTIC WASTE INTO SHEET-LIKE PRODUCTS AND APPARATUS THEREFOR

The present invention relates to a method of and apparatus for reclaiming plastic waste into sheet-like products.

In the process of manufacturing plastic products, especially polyurethane foams, wastes are produced including, for instance, burrs produced in a mold, and chips produced in a trimming operation. Such useless plastic or industrial waste usually has no commercially practicable usage, and thus offers some problems in its disposal. The present invention is especially concerned with a method of an apparatus for reclaiming such plastic waste into sheet-like products. The sheet-like products thus obtained may be utilized as, for example, padding under carpets.

Heretofore, such plastic waste has been reclaimed into sheet-like products by the following steps.

Step 1, crushing plastic waste into pellets;

Step 2, spraying the crushed waste or pellets with urethane-based adhesive, and stirring and mixing the pellets with the adhesive;

Step 3, filling a box-like container with the adhesive-coated pellets;

Step 4, applying steam into the container;

Step 5, allowing the pellets to mature for a predetermined time, thereby curing the adhesive to form the mass of pellets to an integral box-shaped body;

Step 6, slicing the box-shaped body into sheets; and

Step 7, joining the sliced sheets, as necessary, to obtain a desired size of sheet-like products.

Such prior art method, however, may not be adapted to a continuous operation, as the material is put and processed in a container, and hence efficiency of operation may not be increased. Also, the integral mass of material has to be sliced into sheets. For these reasons, the products made by the prior art method are rather high in cost, rendering some problems from a viewpoint of reclaiming industrial waste.

It is , accordingly, the primary object of the present invention to provide a method of and apparatus for reclaiming plastic waste into sheet-like products in which such plastic waste is continuously reclaimed into sheet-like products by relatively minimum steps.

In accordance with the present invention, there is provided a method of continuously reclaiming plastic waste into a sheet-like product which comprises the steps of crushing plastic waste into pellets, mixing the pellets with adhesive, providing a first continuously running endless belt having a number of small holes formed therein, placing the pellets mixed with the adhesive substantially uniformly on the first endless belt, providing a second continuously running endless belt spaced a predetermined distance above the first endless belt, the second belt having a number of small holes formed therein, feeding the pellets in between the first and second endless belts, while pressing the pellets against the first endless belt by use of the second endless belt, and curing the adhesive to bind the pellets, thereby forming an integral sheet-like product.

Also, in accordance with the present invention, there is provided apparatus for continuously reclaiming plastic waste into a sheet-like product which comprises a crusher for crushing plastic waste into pellets, a hopper for accommodating the pellets, the hopper having means for continuously delivering the pellets at a constant supply rate, a stir and transfer unit for stirring the pellets fed from the hopper and transferring the same downstream, an adhesive supplier for supplying adhesive to the pellets in the stir and transfer unit, a first pair of rotatable drums disposed downstream of the stir and transfer unit, a first endless belt trained around the first pair of rotatable drums for receiving the pellets fed from the stir and transfer unit, the endless belt having a numer of small holes formed therein, means for substantially uniformly leveling the height of the pellets to be placed on the first endless belt, a second pair of rotatable drums disposed generally above the first endless belt trained around the first pair of rotatable drums, a second endless belt trained around the second pair of rotatable drums and spaced a predetermined distance above the first endless belt for pressing the pellets against the first endless belt, the second endless belt having a number of small holes formed therein, means for supplying hot steam to the pellets as they are pressed between the first and second endless belts, to thereby cure the adhesive to bind the pellets, and means for supplying hot blast to dry the bound pellets.

The present invention will become more fully apparent from the claims and description as it proceeds in connection with the drawings.

FIG. 1 is a smoewhat simplified side view showing the various components of apparatus for carrying out the method of the present invention;

FIG. 2 is a fragmentary top plan view of the stir and transfer mechanism;

FIG. 3 is a side view as seen looking in the direction of arrow B in FIG. 2;

FIG. 4 is a fragmentary perspective view of the perforated endless belt;

FIG. 5 is a top plan view of the leveling rollers; and

FIG. 6 is a schematic representation of an alternate leveling means.

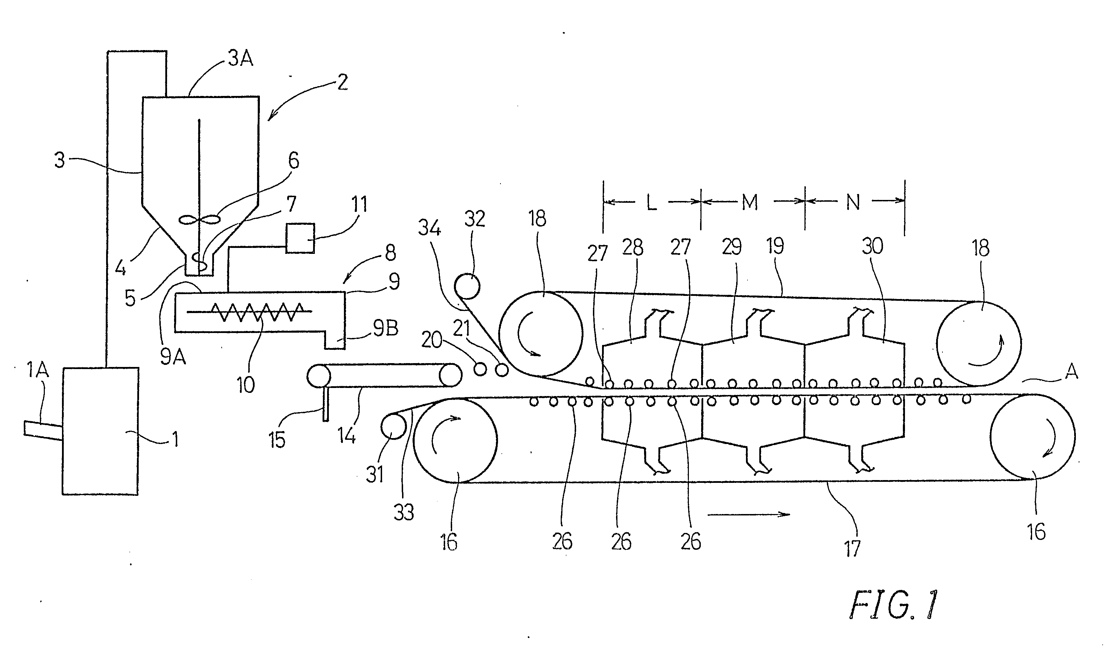

Referring to the drawings and to FIG. 1 in particular, shown therein is apparatus in which the method of the present invention is performed. As shown therein, a crusher 1 is provided having a material supply opening 1A. The crusher 1 serves to crush plastic waste, for example, polyurethane foam introduced from the supply opening 1A to thereby produce small-diameter pellets. In the apparatus of the invention, the crusher 1 may also crush plastic waste including glass wool and other fibrous material. The diameter of pellets to be crushed is adjustable, and in this embodiment, plastic waste is crushed preferably to a diameter ranging from 10 to 20 mm.

Reference numeral 2 designates a hopper into which plastic waste crushed into pellets is introduced. The hopper 2 has a large-diameter cylindrical portion 3 and a tapered portion 4 diminishing in diameter downwardly. The hopper 2 also has a material supply opening 3A at the top thereof and a small-diameter cylindrical discharge portion 5 connected to the lower end of the tapered portion 4. Within the tapered portion 4, a stirring blade 6 is provided having a vertical axis of rotation, and within the discharge portion 5, a material-discharging screw 7 is provided serving to twist out the pellets delivered thereto. It is to be noted that the amount of discharge is proportional to the number of revolutions of the screw 7.

Disposed generally below the hopper 2 is a stir and transfer unit 8 which includes a casing 9 having open opposite ends and a stir and transfer mechanism 10. An adhesive supplier 11 is provided serving to spray urethane-based adhesive into the stir and transfer unit 8.

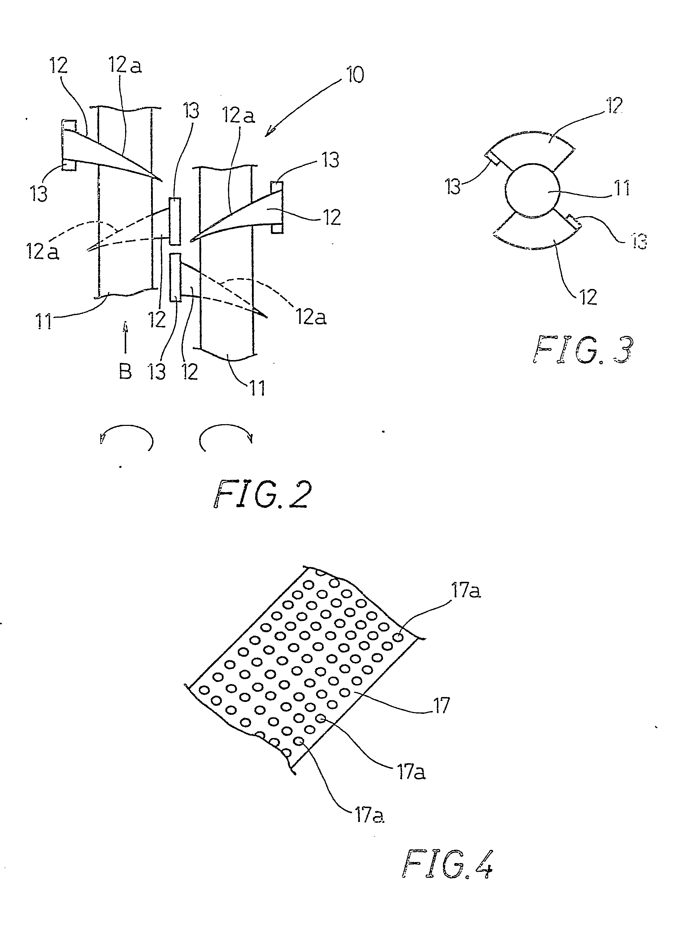

The casing 9 has in its upstream thereof a material supply opening 9A formed in confronting relation with the discharge portion 5 of the hopper 2. The casing 9 also has in the downstream thereof a discharge opening 9B facing downwardly. Thus, the stir and transfer mechanism 10 serves to stir the pellets supplied continuously from the supply opening 9A along with the adhesive being sprayed and transfer the same to the discharge opening 9B. Specifically, as shown in FIG. 2, the stir and transfer mechanism 10 includes a pair of parallel rotary shafts 11 extending from the supply opening 9A to the discharge opening 9B and a plurality of feeding blades 12 secured to the opposite sides of the rotary shafts 11 in axially spaced relation with each other.

Each of the feeding blades 12 has an inclind surface 12a which serves to progressively press and advance the pellets in the axial direction of the rotary shafts 11 responsive to the rotation of latter in the direction of the arrows. As best shown in FIG. 3, each of the blades 12 is of a configuration corresponding to a quater spiral vane. The feeding blade 12 also has a rectangular stirring blade 13 secured to one end thereof in a manner extending parallel to the rotary shafts 11. Thus, the stirring blades 13 are effective to force the pellets from one rotary shaft 11 toward the other, thereby properly mixing the pellets with the adhesive.

Disposed generally below the stir and transfer unit 8 is an oscillating conveyor 14 which is utilized to deliver the pellets discharged from the discharge opening 9B. Specifically, the upstream side of the conveyor 14 is located directly below the discharge opening 9B of the stir and transfer unit 8. The conveyor 14 may be horizontally oscillated by a vertically extending rotary shaft 15 provided on the upstream portion thereof.

As the pellets are fed through the apparatus, a pair of drums 16 are provided and driven for rotation in the direction of arrows, the upstream drum 16 being located upstream of the downstream side of the conveyor 14. Around the drums 16 is trained an endless belt 17 made of stainless steel and having a number of holes 17a formed therein, as shown in FIG. 4. The diameter of holes 17a is about 5 mm so that the pellets may not pass therethrough. The belt 17 is of a width slightly greater than the oscillating width of the conveyor 14 and therefore, the belt 17 may positively receive the pellets fed by the conveyor 14. During the feeding operation, the conveyor 14 is oscillated by the rotary shaft 15 to distribute the pellets laterally on the belt 17, thereby providing a uniform height of the pellets to be carried on the belt 17.

Disposed generally above the drums 16 are a second pair of drums 18 which are driven for rotation in the direction of arrows, the distance between the drums 18 being shorter than that between the drums 16. A second endless belt 19 similar to the belt 17 is trained around the drums 18. The upper and lower belts 19 and 17 are arranged so as to be driven at the identical speeds, and the pellets are held and fed in the spacing formed between the belts 17 and 19.

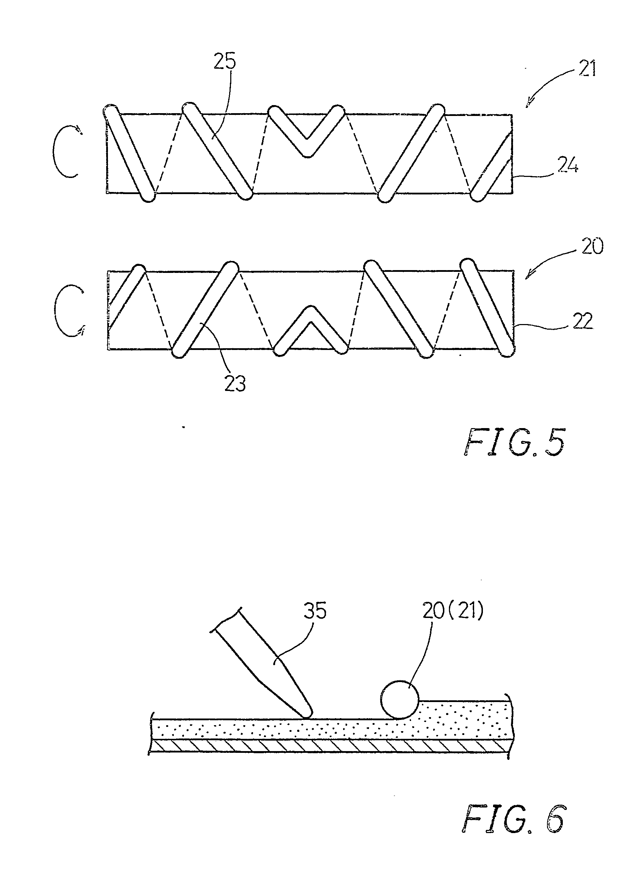

Leveling rollers 20 and 21 are provided generally between the conveyor 14 and the upstream drum 18 and are utilized to level the pellets on the belt 17. As shown in FIG. 5, the leveling roller 20 includes a rotary shaft 22 and a blade 23 secured to the rotary shaft 22 in such a manner that the direction of its inclination is symmetrical about the longitudinal center of the rotary shaft 22 and adapted to collect the pellets centrally on the belt 17 during rotation of the rotary shaft 22. Similarly, the leveling roller 21 includes a rotary shaft 24 and a blade 25 secured to the rotary shaft 24 in such a manner that the direction of its inclination is symmetrical about the longitudinal center of the rotary shaft 24 and adapted to push the pellets on the belt 17 outwardly during rotation of the rotary shaft 24. Thus, the leveling rollers 20 and 21 are served first to collect the pellets to the central area on the belt 17 and then to push the same outwardly, thereby providing more uniform height of the pellets on the belt 17.

A plurality of rollers 26 are provided below and in contact with the upper run of the belt 17; and a plurality of roller 27 are provided above and in contact with the lower run of the belt 19. By raising or lowering the rollers 27 by an adjusting mechanism (not shown), the amount of spacing between the belts 17 and 19 or the thickness of pellets being held may be adjusted. It is to be noted that the amount of spacing between the belts 17 and 19 is relatively great on the upstream side, diminishing toward the downstream side, so that the pellets may be positively fed through such spacing. Thereafter, a desired amount of spacing is maintained downstream from the section L as show in FIG. 1.

While the pellets are fed downstream between the belts 17 and 19, they are steamed in the section L by a hot steam supplier 28 and dried in the sections M and N by a pair of hot blast suppliers 29 and 30. In the sections L and M, curing of adhesive will take place and reaction gas will be generated. The hot steam supplier 28 and the hot blast supplier 29 are of the sealed circulating type which may prevent possible reaction gas from flowing out of these suppliers 28 and 29.

In the apparatus thus constructed, a pair of supply rolls 31 and 32 may be provided generally upstream of the upstream drums 16 and 18, respectively. The supply rolls 31 and 32 have the same width as that of the belts 17 and 19, and store nonwooven fabric 33 and 34, respectively. The nonwooven fabric 33 is drawn out from the supply roll 31 as it is held on the upper surface of the upper run of the belt 17, and the nonwooven fabric 34 is drawn from the supply roll 32 as it is held on the lower surface of the lower run of the belt 19. By means of these supply rolls 31 and 32, the final sheet-like product will have pieces of nonwooven fabric applied thereon. Such sheet-like products with nonwooven fabric applied thereon have good appearance, increased strength and reduced coefficient of friction. As should be apparent, the nonwooven fabric may be applied only on one side of the product. Also, it will be noted that these rolls 31 and 32 may not be employed depending on the production requirements.

In operation, plastic waste is put into the crusher 1 through the supply opening 1A and is crushed into pellets. The crushed material or pellets are transferred into the hopper 2, and are stirred by the stirring blade 6 so that they may be uniform. The uniform pellets are discharged continuously at a constant rate from the hopper 2 into the stir and transfer unit 8 by means of the material discharging screw 7.

The pellets are stirred along with adhesive by the stir and transfer mechanism 10 of the stir and transfer unit 8, transferred downstream, and ultimately discharged to the oscillating conveyor 14. Thereupon, the conveyor 14 transfers the pellets downstream, discharging the same to the endless belt 17. At this time, since the conveyor 14 oscillates horizontally in a lateral direction, the pellets are distributed on the belt 17 to a substantially uniform height relative to the lateral direction. The pellets on the belt 17 are further leveled by the leveling rollers 20 and 21.

While the pellets are fed downstream by the belts 17 and 19, the pellets are pressed between the belts 17 and 19 to a predetermined thickness. At this time, the nonwooven fabric 33 and 34 may be applied to the surfaces of the mass of pellets. As the pellets pass through the section L, steam is applied by the hot steam supplier 28 to cure the adhesive and thereby to bind the pellets. The bound pellets are then fed through the section M where the adhesive is further cured and the steam applied in the section L is dried by the hot blast supplier 29. The bound pellets are further fed through the section N where the bound pellets are fully dried by the hot blast supplier 30. As the result, a sheet-like product may be obtained from the outlet as indicated at A.

It will be recognized that various type of pellets may be put into the hopper 2. For instance, such pellets could be large or small, and soft or hard, or could include fibrous material. These pellets are stirred and mixed by the stirring blade 6 in the hopper 2, and by varying the type and proportion of pellets to be supplied to the hopper 2, the strength, the elasticity and other factors of the final sheet-like product may be varied.

It will be recognized also that the adhesive is not restricted to urethane-based adhesives. For instance, thermosetting adhesive may be used and in that case, the belts 17 and 19 may be heated in a known manner, instead of spraying hot steam.

It will be appreciated that modifications may be made in the present invention. For example, as shown in FIG. 6, the leveling rollers 20 and 21 can be an air nozzle 36 which may level the pellets by means of air blow.

It will be appreciated also that the final sheet-like product may be rolled around a reel; when the final product is thick, it may be sliced into sheets as it is fed out from the outlet A.

## Claims

1. A method of continuously reclaiming plastic waste into a sheet-like product, comprising the steps of:
crushing plastic waste into pellets;
mixing the pellets with adhesive;
providing a first continuously running endless belt having a number of small holes formed therein;
placing the pellets mixed with the adhesive substantially uniformly on said first endless belt;
providing a second continuously running endless belt spaced a predetermined distance above said first endless belt, said second endless belt having a number of small holes formed therein;
feeding the pellets in between said first and second endless belts, while pressing the pellets against said first endless belt by use of said second endless belt; and
curing the adhesive to bind the pellets, thereby forming an integral sheet-like product.

2. The method as defined in claim 1 wherein said plastic waste is polyurethane foam and wherein said adhesive is a urethane adhesive which is curable upon application of heat and water.

3. The method as defined in claim 1 or 2 wherein said curing step includes applying hot steam to the pellets mixed with adhesive through said small holes of said first and second endless belts while the pellets are pressed between said first and second endless belts.

4. The method as defined in claim 3 comprising the additional step of applying hot blast to the pellets, after said hot steam applying step.

5. The method as defined in claim 1,2,3 or 4 comprising the additional step of providing nonwooven fabric on the upper surface of said first endless belt, or the lower surface of the second endless belt, prior to said pellet placing step.

6. Apparatus for continuously reclaiming plastic waste into a sheet-like product, comprising:
a crusher for crushing plastic waste into pellets;
a hopper for accommodating the pellets, said hopper having means for continuously delivering the pellets at a constant supply rate;
a stir and transfer unit for stirring the pellets fed from said hopper and transferring the same downstream;
an adhesive supplier for supplying adhesive to the pellets in said stir and transfer unit;
a first pair of rotatable drums disposed downstream of said stir and transfer unit;
a first endless belt trained around said first pair of rotatable drums for receiving the pellets fed from said stir and transfer unit, said endless belt having a number of small holes formed therein;
means for substantially uniformly leveling the height of the pellets to be placed on said first endless belt;
a second pair of rotatable drums disposed generally above said first endless belt trained around said first pair of rotatable drums;
a second endless belt trained around said second pair of rotatable drums and spaced a predetermined distance above said first endless belt for pressing the pellets against said first endless belt, said second endless belt having a number of small holes formed therein;
means for supplying hot steam to the pellets as they are pressed between said first and second endless belts, to thereby cure the adhesive to bind the pellets; and
means for supplying hot blast to dry the bound pellets.

7. The apparatus as defined in claim 6 wherein said means for leveling the height of the pellets comprises an oscillating conveyor disposed generally downstream of said stir and transfer unit for receiving the pellets supplied therefrom and transferring the same to said first endless belt, said oscillating conveyor having a forward end oscillatable within the width of said first endless belt.

8. The apparatus as defined in claim 6 or 7 wherein said means for leveling the height of the pellets further comprises a pair of spaced leveling rollers extending laterally above said first endless belt adjacent said oscillating conveyor, one of said rollers having a spiral blade adapted to direct the pellets toward the center of said first endless belt during rotation thereof, and the other roller having a spiral blade adapted to direct the pellets toward the opposite sides of said first endless belt during rotation thereof.

9. The apparatus as defined in claim 6, 7 or 8 wherein the amount of spacing between said first and second endless belts is adjustable.

10. The apparatus as defined in claim 6,7,8 or 9 wherein the amount of spacing between said first and second belts is relatively great upstream and is gradually reduced downstream until a uniform amount of spacing is maintained between said first and second endless belts.

FIG.1

0 245 544

FIG.2

FIG.3

FIG.4

FIG.5

FIG. 6